# EUROPÄISCHE PATENTSCHRIFT

(11) **EP 2 386 016 B1**
(45) Veröffentlichungstag und Bekanntmachung des Hinweises auf die Patenterteilung: **08.08.2018**
(21) Anmeldenummer: 09760796.4
(22) Anmeldetag: 13.11.2009
(51) Int. Cl.: F01N 3/20

(54) **SYSTEM ZUM EINBRINGEN EINES SCHADSTOFFVERMINDERNDEN MEDIUMS IN EIN ABGAS**
SYSTEM FOR INTRODUCING A DEPOLLUTING MEDIUM IN EXHAUST GAS
SYSTÈME D'INTRODUCTION D'UN MÉDIUM POUR RÉDUIRE LA POLLUTION DANS DES GAZ D'ÉCHAPPEMENT

(30) Priorität: 09.01.2009 DE 102009000108
(43) Veröffentlichungstag der Anmeldung: 16.11.2011
(73) Patentinhaber: Robert Bosch GmbH, 70442 Stuttgart (DE)
(72) Erfinder: HAEBERER, Rainer, 75015 Bretten (DE); BRUNS, Joachim, 73669 Lichtenwald (DE)
(86) Internationale Anmeldenummer: PCT/EP2009/065097
(87) Internationale Veröffentlichungsnummer: WO 2010/078990

(56) Entgegenhaltungen:
- EP-A1- 1 199 097
- WO-A1-99/02825
- WO-A1-2005/113279
- WO-A1-2008/138757
- DE-A1- 10 059 549
- DE-A1-102006 059 991

## Beschreibung

### Stand der Technik

Die Erfindung geht aus von bekannten Verfahren und Vorrichtungen zur Nachbehandlung von Abgasen, insbesondere von Abgasen von Brennkraftmaschinen. Es sind Techniken bekannt, bei welchen schadstoffvermindernde Medien, insbesondere fluide Medien (beispielsweise Flüssigkeiten oder Gase), in das Abgas eindosiert, beispielsweise eingesprüht, werden. Ein wesentliches Anwendungsbeispiel, auf welches die vorliegende Erfindung jedoch nicht beschränkt ist, ist das Einsprühen einer Harnstoff-Wasser-Lösung (HWL) in den Abgastrakt von Dieselmotoren in Personenkraftwagen oder Nutzkraftwagen, um den Anteil der Stickoxide (NOx) im Abgas zu vermindern. Dabei wird in einer Reduktionsreaktion das NOx unter Bildung von Stickstoff und Wasser reduziert. Derartige Verfahren werden oft auch als SCR-Verfahren (SCR: selective catalytic reduction, selektive katalytische Reduktion) bezeichnet. Harnstoff-Wasser-Lösungen als Beispiele für Reduktionsmittel sind beispielsweise unter dem Markennamen "AdBlue" erhältlich. Durch thermische Zersetzung des Harnstoffs entsteht aus dem Harnstoff als Reduktionsmittel-Vorläufer das eigentliche Reduktionsmittel, nämlich gasförmiger Ammoniak. Zahlreiche andere Ausführungsbeispiele schadstoffvermindernder Medien sind bekannt.

Bei PKW-Systemen oder NKW-Systemen kann beispielsweise eine ausreichende Menge an HWL in einem Tank bevorratet werden, mit der das Fahrzeug während eines Wartungsintervalls (beispielsweise bis zum nächsten Ölwechsel) betrieben werden kann. Sicherheitsvorgaben verlangen jedoch in vielen Fällen, dass die geforderte Menge an Reduktionsmittel im Außenbereich des Kraftfahrzeugs gelagert wird, was jedoch erhöhte Anforderungen mit sich bringt, insbesondere hinsichtlich der mechanischen Stabilität und der Frostsicherheit. So stellt insbesondere bei den genannten HWL die Frostsicherheit eine erhebliche Herausforderung dar, da beispielsweise AdBlue bei ca. -11 °C gefriert. Um das schadstoffvermindernde Medium, insbesondere wässrige Lösungen und/oder Gemische, pumpfähig zu erhalten, werden in vielen Fällen aufwändig herzustellende Heizsysteme in die Systeme eingebaut. Alternativ oder zusätzlich muss das gesamte System, insbesondere in dem System enthaltene Vorratsbehälter, derart ausgelegt werden, dass dieses beim Gefrieren keinen Schaden nimmt. Insbesondere wässrige schadstoffvermindernde Medien, wie beispielsweise AdBlue, erfahren beim Gefrieren eine erhebliche Volumenänderung, beispielsweise 10 % bis 12 % für AdBlue. Diese Volumenänderung kann dazu führen, dass sehr große Kräfte im Eis und/oder in den Bauteilen, die das Eis umfassen oder im Eis eingebettet sind, auftreten. Diese Kräfte können sogar zu Beschädigungen der Systeme führen. Verschiedene Konzepte sind denkbar, um dieser technischen Herausforderung des Eisdrucks zu begegnen. Beispielsweise kann eine Einfrierrichtung eines Tanksystems durch gezieltes Isolieren einer Tankaußenseite so beeinflusst werden, dass keine nennenswerten Kräfte aufgebaut werden können. Auch Kompensationsvorrichtungen sind grundsätzlich denkbar, um Volumenänderungen bei Phasenübergängen aufzunehmen. Derartige Konzepte, welche grundsätzlich möglich sind, sind jedoch in der Praxis vergleichsweise aufwändig und erfordern teilweise einen erheblichen Bauraum, welcher das maximale Füllvolumen des Tanksystems negativ beeinflussen kann.

WO 2005/113279 A1 bezieht sich auf einen Tank für ein Additiv für ein Fahrzeug mit einer Verbrennungskraftmaschine der Tank umfasst einen flexiblen Beutel, der das Additiv enthält und mit einer Einrichtung verbunden ist, welche das Additiv mit einem Druck beaufschlagt, um dieses zu dosieren, derart, dass das Additiv ausgebracht werden kann.

EP 1 199 097 A1 bezieht sich auf eine Einrichtung zur Abgasnachbehandlung von Dieselmotoren. Die Einrichtung umfasst ein Vorratsbehälter für eine Harnstofflösung, die mittels einer Pumpe einem Mischbereich zugeführt wird. In diesen mündet eine Druckluftleitung. Um eine problemlose Versorgung mit Harnstofflösung sicherzustellen und die Harnstofflösung in einfacher Weise dem Mischbereich zuführen zu können, hat der Vorratsbehälter eine flexible Wandung. Der Behälter kann vom Fahrer des Kraftfahrzeugs bequem mitgeführt und bei Bedarf in die Einrichtung eingesetzt werden. Die Einrichtung eignet sich für Lastkraftwagen. Die flexiblen Nachfüllbehälter können nach Verbrauch der Harnstofflösung sehr klein zusammengelegt und problemlos entsorgt werden.

WO 99/02825 bezieht sich auf einen Tank für ein Fahrzeug mit Reduktionsmittel betriebene Abgas-Reinigungsanlage. Für die Bevorratung von Kraftstoff, der zum Betrieb einer Verbrennungskraftanlage, wie beispielsweise zum Betrieb des Dieselmotors eines Kraftfahrzeugs vorgesehen ist, dient ein Kraftstoffraum. Die Verbrennungskraftanlage ist mit einer Abgas-Reinigungsanlage für die Reinigung ihres Abgases ausgerüstet, wobei diese Abgas-Reinigungsanlage mit einem Reduktionsmittel betrieben wird und nach dem SZR-Prinzip arbeitet. Für die Bevorratung des Reduktionsmittels dient ein Reduktionsmittelraum. Um den insbesondere in einem Fahrzeug knapp bemessene Einbauraum möglichst gut auszunutzen, und um die Befestigung entsprechender Tanks für den Kraftstoff und das Reduktionsmittel einfach zu gestalten, ist der Kraftstoffraum mit dem Reduktionsmittelraum in einer Baueinheit zusammengefasst. Diese Baueinheit lässt sich als Ganzes durch mindestens einen Halter an einem Fahrzeug befestigen.

DE 100 59 549 A1 bezieht sich auf einen Behälter zur Bevorratung von gefriergefährdeten Flüssigkeiten. Dabei handelt es sich insbesondere um Harnstoff-Wasser-Lösungen für mit Einrichtungen zur selektiven katalytischen Reduktion ausgerüsteten Kraftfahrzeuge. Es wird vorgeschlagen, dass zur Bereitstellung eines Ausgleichsvolumens für den Fall eines durch Gefrieren der Flüssigkeit erhöhten Volumenbedarfs zumindest ein Teil einer Behälterwand zum Zulassen von volumenvergrößernden Ausgleichsbewegungen ausgebildet ist und/oder zumindest ein Teil der Innenfläche der Behälterwand mit einem elastisch und/oder plastisch komprimierbaren Belag versehen ist.

WO 2008/138757 A1 bezieht sich auf eine Leitungsführung durch einen Heiztopfdeckel eines Heiztopfes eines Reduktionsmitteltanks.

Mindestens eine Leitung durchsetzt eine Öffnung des Heiztopfdeck der mittels eines Dichtelementes abgedichtet ist. Es ist vorgesehen, dass das Dichtelement als elastischer Steckdichtstopfen ausgeführt ist, der in eine dem Heiztopfdeckel zugeordnete Aufnahme dichtend eingesteckt ist.

DE 10 2006 059 991 A1 bezieht sich auf einen Personenkraftwagen. Im Bereich zwischen hinteren Längsträgern und zwischen einem vorderen bzw. hinteren Querträger ist ein Bauraum vorgesehen, wobei zumindest ein Teilbereich des Bauraumes von einem Harnstofftank eingenommen ist.

### Offenbarung der Erfindung

Es werden daher ein System und ein Verfahren zum Einbringen eines schadstoffvermindernden Mediums in ein Abgas vorgeschlagen. Insbesondere kann es sich, wie oben dargestellt, bei dem schadstoffvermindernden Medium um ein Reduktionsmittel und/oder einen Reduktionsmittelvorläufer handeln, beispielsweise eine Harnstoff-Wasser-Lösung, insbesondere AdBlue. Auch andere Reduktionsmittel und/oder Reduktionsmittelvorläufer sind jedoch grundsätzlich möglich. Das System kann insbesondere zum Lagern, zum Transport und zur Entnahme von schadstoffvermindernden Medien im Kraftfahrzeug eingesetzt werden. Das System kann zur Durchführung eines erfindungsgemäßen Verfahrens eingerichtet sein, und das Verfahren kann unter Verwendung eines erfindungsgemäßen Systems durchgeführt werden, so dass bezüglich möglicher Ausführungsformen des Verfahrens beispielsweise auf das System verwiesen werden kann und umgekehrt. Weiterhin wird ein flexibler Vorratsbeutel zum Einsatz in einem erfindungsgemäßen System vorgeschlagen, für dessen mögliche Ausgestaltungen ebenfalls auf die einen Vorratsbeutel betreffenden Merkmale des erfindungsgemäßen Systems verwiesen werden kann, wie sie nachfolgend näher beschrieben werden.

Das System dient dem Einbringen eines schadstoffvermindernden Mediums in ein Abgas. Für derartige Systeme kann allgemein beispielsweise auf die obige Beschreibung des Standes der Technik verwiesen werden. Dabei kann ein Reduktionsmittel oder ein Reduktionsmittel-Vorläufer verwendet werden, beispielsweise ebenfalls gemäß der obigen Beschreibung. Im Folgenden wird nur noch auf den Begriff des Reduktionsmittels Bezug genommen, ohne hierdurch die Möglichkeit der Verwendung anderer Arten von schadstoffvermindernden Medien und/oder von Reduktionsmittelvorläufern auszuschließen. Das System kann grundsätzlich auch zur Aufnahme und Bevorratung anderer Arten von Flüssigkeiten ausgestaltet sein. Das System kann beispielsweise eine Dosiervorrichtung umfassen, welche das Reduktionsmittel in das Abgas eindosieren kann. Derartige Dosiervorrichtungen sind aus dem Stand der Technik bekannt. Das System umfasst mindestens einen Vorratsbehälter zur Aufnahme eines Vorrats des Reduktionsmittels. Beispielsweise kann dieser Vorrat ein Volumen zwischen 1 und 50 Litern umfassen, insbesondere zwischen 15 und 30 Litern. In diesen Systemen findet in der Regel ein Nachfüllen des Vorrats im Rahmen eines Service statt, beispielsweise alle 25.000 km. In zukünftigen Systemen, bei welchen ein Benutzer selbst nachtankt, kann der Vorrat beispielsweise zwischen 1 und 20 Litern liegen, insbesondere zwischen 5 und 10 Litern. Das Reduktionsmittel kann beispielsweise über ein Leitungssystem, beispielsweise ein Leitungssystem mit mindestens einer Entnahmeleitung, an die optionale Dosiervorrichtung weitergeleitet werden. Weiterhin können zusätzliche Elemente umfasst sein, wie beispielsweise Ventile, Pumpen, Heizelemente oder Ähnliches.

Ein Grundgedanke der vorliegenden Erfindung besteht darin, zur Bevorratung des Vorrats des Reduktionsmittels einen flexiblen Vorratsbeutel zu verwenden, insbesondere einen Kunststoffsack, beispielsweise einen vollständig geschlossenen Kunststoffsack. Dieser flexible Vorratsbeutel soll mindestens eine Folienwand und vorzugsweise mindestens eine Entnahmeöffnung zur Entnahme des Reduktionsmittels aufweisen. Unter einem flexiblen Vorratsbeutel ist dabei ein Element zu verstehen, welches eine Menge des Reduktionsmittels aufnehmen kann und welches dabei vollständig flexibel und/oder verformbar ausgestaltet ist. Diese Verformbarkeit soll derart sein, dass der Vorratsbeutel bereits unter Einwirkung seiner eigenen Gewichtskraft seine Form, insbesondere sein inneres Volumen, verändern kann. Die flexible Folienwand, welche den Innenraum des Vorratsbeutels vorzugsweise vollständig oder nahezu vollständig umschließt, kann beispielsweise eine Kunststofffolie umfassen. Die Form des Vorratsbeutels kann dabei grundsätzlich beliebig sein und kann beispielsweise im gefüllten Zustand eine Quaderform, eine Würfelform, eine runde Form oder eine ähnliche Form sein.

Die optionale mindestens eine Entnahmeöffnung kann beispielsweise rund ausgestaltet sein und kann insbesondere verschließbar ausgestaltet sein. Beispielsweise kann diese Entnahmeöffnung mit einem Gewindestutzen zum Anschließen weiterer Elemente und/oder zum Aufbringen eines Schraubverschlusses ausgestaltet sein. Auch andere Arten von Verschlusselementen sind möglich. Grundsätzlich ist es jedoch auch möglich, den flexiblen Vorratsbeutel zunächst vollständig oder Entnahmeöffnung auszugestalten und beispielsweise in dieser Weise zu bevorraten und/oder zu liefern. Wenn keine Entnahmeöffnung vorgesehen ist, kann beispielsweise der geschlossene flexible Vorratsbeutel, befüllt mit schadstoffverminderndem Medien, ausgeliefert werden, beispielsweise als fertiges Gebinde. Anschließend kann, beispielsweise beim Einsetzen und/oder unmittelbar vor dem Einsetzen in ein erfindungsgemäßes System, eine Entnahmeöffnung geschaffen werden, beispielsweise durch Durchstechen der flexiblen Folienwand.

Das System kann weiterhin mindestens ein im Wesentlichen starres Schutzgehäuse umfassen, welches an oder in einem Kraftfahrzeug aufnehmbar ist und welches eingerichtet ist, um den Vorratsbeutel ganz oder teilweise aufzunehmen. Das Schutzgehäuse kann beispielsweise an oder in einem Kraftfahrzeug befestigbar sein. Unter einem Schutzgehäuse ist dabei allgemein ein Gehäuse zu verstehen, welches den aufgenommenen Vorratsbeutel vor mechanischen Einwirkungen schützen kann. Das Schutzgehäuse kann beispielsweise im Wesentlichen starr ausgebildet sein und kann beispielsweise ein Schutzgehäuse aus Metall und/oder Kunststoff sein. Beispielsweise kann eine Kunststoffkiste verwendet werden, in welche der Vorratsbeutel ganz oder teilweise eingesetzt werden kann. Das Schutzgehäuse kann dementsprechend stabil ausgestaltet sein. Das Schutzgehäuse kann entweder fahrzeugfest verankert werden oder auch demontierbar im Fahrzeug angebracht sein. Das Schutzgehäuse kann beispielsweise auch ganz oder teilweise in einer Reserveradmulde integriert sein oder ganz oder teilweise mit der Reserveradmulde bauteilidentisch sein.

Weiterhin kann das Schutzgehäuse mindestens eine Beladeöffnung aufweisen, welche eingerichtet ist, um ein Einbringen des Vorratsbeutels in den Vorratsbehälter und/oder ein Herausnehmen des Vorratsbeutels aus dem Vorratsbehälter zu ermöglichen. Die Beladeöffnung kann beispielsweise als verschließbare Beladeöffnung ausgestaltet sein, beispielsweise mittels einer Klappe, eines Deckels, eines Schiebers oder einer ähnlichen verschließbaren Einrichtung. Auch eine Verriegelbarkeit kann gewährleistet sein.

Der Vorratsbeutel kann weiterhin mindestens ein hydraulisches Element aufweisen, also ein Element, welches die Handhabung von in dem Vorratsbeutel aufgenommenem flüssigem Reduktionsmittel erleichtert und/oder ermöglicht. Insbesondere können eines oder mehrere der folgenden hydraulischen Elemente vorgesehen sein: ein Befestigungselement zum Anschließen mindestens einer Entnahmeleitung an den Vorratsbeutel, insbesondere eine hydraulische Steckverbindung; eine Leitungsdurchführung, um eine Leitung ins Innere des Vorratsbeutels hineinzuführen; eine Entlüftung; ein Ventil, insbesondere ein Rückschlagventil; ein in den Vorratsbeutel hineinragender Entnahmeschlauch, vorzugsweise ein flexibler Entnahmeschlauch, beispielsweise ein spiralförmiger flexibler Entnahmeschlauch, insbesondere ein Kunststoffschlauch; ein in den Vorratsbeutel hineinragender Heiztopf, also ein Element, welches eingerichtet ist, um gezielt zumindest einen Teil des in dem Vorratsbeutel aufgenommenen Reduktionsmittels durch Erwärmen aufzutauen, und diesen Teilvorrat zur Entnahme vorzubereiten.

Das System kann weiterhin mindestens ein Heizelement zum Beheizen des Vorrats des Reduktionsmittels umfassen. Dieses kann ganz oder teilweise im Inneren des Vorratsbeutels angeordnet sein oder, alternativ oder zusätzlich, auch ganz oder teilweise außerhalb des Vorratsbeutels. Da der Vorratsbeutel eine Folienwand aufweist, also eine dünne, flexible bzw. verformbare Wand, ist in der Regel auch ein guter Wärmeübertrag von einer Außenseite des Vorratsbeutels hin zu einem in den Vorratsbeutel aufgenommenen Reduktionsmittel gegeben. Dementsprechend kann das Heizelement auch ganz oder teilweise außerhalb des Vorratsbeutels aufgenommen sein, beispielsweise ganz oder teilweise in einem den Vorratsbeutel aufnehmenden Schutzgehäuse. Beispielsweise kann das Schutzgehäuse mindestens eine nicht-ebene Bodenfläche aufweisen, insbesondere eine gekrümmte Bodenfläche, wobei der Vorratsbeutel auf der nicht-ebenen Bodenfläche aufliegt und wobei das Heizelement ganz oder teilweise in die nicht-ebene Bodenfläche integriert ist. Allgemein kann das Heizelement eine Vielzahl möglicher Heizelemente umfassen, beispielsweise elektrische und/oder elektromagnetische Heizquellen. So können beispielsweise ein oder mehrere der folgenden Heizelemente vorgesehen sein: eine Flächenheizung, insbesondere eine Heizfolie; eine Fluidheizung, insbesondere eine mit einem Motorkühlkreislauf verbindbare Fluidheizung, insbesondere eine als Linienheizung ausgestaltete Fluidheizung; eine Widerstandsheizung; eine Peltier-Heizung; eine Infrarotheizung; einen Heiztopf. Erfindungsgemäß umfasst das System mindestens ein Schwappschutzelement zur Unterdrückung von Schwappbewegungen des Reduktionsmittels innerhalb des Vorratsbeutels. Dieses Schwappschutzelement ist derart eingerichtet, dass dieses das Innere des Vorratsbeutels zumindest teilweise in Teilbereiche unterteilt, wobei das Schwappschutzelement vorzugsweise mindestens eines der folgenden Elemente umfasst: ein im Inneren des flexiblen Vorratsbeutels angeordnetes Trennelement, insbesondere ein flexibles Trennelement; ein mit einem den flexiblen Vorratsbeutel aufnehmenden Schutzgehäuse verbundenes starres Trennelement, insbesondere ein mit einem Deckel des Schutzgehäuses verbundenes starres Trennelement. Verschiedene Ausführungsbeispiele derartiger Schwappschutzelemente werden unten näher beschrieben.

Weiterhin kann das System mindestens ein Kompensationselement umfassen, welches eingerichtet ist, um bei einem hohen Füllstand des schadstoffvermindernden Mediums in dem Vorratsbeutel ein geringeres Volumen einzunehmen als bei einem niedrigen Füllstand des schadstoffvermindernden Mediums in dem Vorratsbeutel. Hierdurch kann beispielsweise zumindest teilweise ein Volumenausgleich bei unterschiedlichen Füllständen erfolgen. Das Kompensationselement kann beispielsweise in das Innere des Schutzgehäuses eingebracht werden und/oder ganz oder teilweise in das Innere des flexiblen Vorratsbeutels. Auf diese Weise kann das Kompensationselement auch genutzt werden, um einen flexiblen Sumpf für eine Restmenge an Reduktionsmittel zu bilden, insbesondere bei niedrigen Füllständen. Das Kompensationselement kann beispielsweise ein plastisch und/oder elastisch verformbares Element umfassen, beispielsweise einen Schaumstoff. Auch andere Ausgestaltungen sind möglich.

Das System kann weiterhin mindestens einen Sensor zur Erfassung mindestens einer Eigenschaft des Reduktionsmittels umfassen. Dabei kann es sich beispielsweise um eine physikalische und/oder chemische Eigenschaft des Reduktionsmittels handeln und/oder um die Eigenschaft, dass überhaupt Reduktionsmittel an einer bestimmten Stelle vorhanden ist. Insbesondere können einer oder mehrere der folgenden Sensoren vorgesehen sein: ein Füllstandsmesser zum Erfassen eines Füllstandes des schadstoffvermindernden Mediums in dem Vorratsbeutel, insbesondere ein Kraftsensor und/oder ein Drucksensor; ein Temperatursensor zum Erfassen einer Temperatur des schadstoffvermindernden Mediums; ein Leckagesensor zum Erkennen von aus dem Vorratsbeutel austretendem schadstoffverminderndem Medium.

Das System kann einen oder mehrere der Vorratsbeutel umfassen. Besonders bevorzugt ist es, wenn das System mindestens einen Reserve-Vorratsbehälter umfasst, welcher eingerichtet ist, um mindestens einen Reserve-Vorrat des Reduktionsmittels aufzunehmen. Auch der Reserve-Vorratsbehälter kann beispielsweise mindestens einen Reserve-Vorratsbeutel umfassen und/oder mindestens ein Reserve-Schutzgehäuse. Das Reserve-Schutzgehäuse kann dabei ganz oder teilweise getrennt von dem oben beschriebenen Schutzgehäuse ausgestaltet sein, und, alternativ oder zusätzlich, kann auch der Reserve-Vorratsbeutel ganz oder teilweise getrennt von dem mindestens einen Vorratsbeutel für die Aufnahme des Haupt-Vorrats an Reduktionsmittel ausgestaltet sein. Der Reserve-Vorratsbehälter kann insbesondere an einem anderen Ort im Kraftfahrzeug angeordnet sein als der eigentliche Vorratsbehälter, beispielsweise in einem Motorraum. Der Reservevorrat kann beispielsweise genutzt werden, um bei Erschöpfung des eigentlichen Vorrats verwendet zu werden und/oder kann beispielsweise genutzt werden, bis der Haupt-Vorrat in dem Vorratsbehälter aufgetaut ist. Verschiedene Einsatzmöglichkeiten sind denkbar.

Wie oben beschrieben, wird weiterhin ein flexibler Vorratsbeutel in einem erfindungsgemäßen System vorgeschlagen, welcher die oben beschriebenen Eigenschaften aufweist und welcher auch gemäß den oben beschriebenen optionalen Eigenschaften ausgestaltet sein kann. Weiterhin wird ein Verfahren zum Einbringen eines schadstoffvermindernden Mediums, insbesondere eines Reduktionsmittels und/oder Reduktionsmittelvorläufers, in ein Abgas vorgeschlagen, wobei zur Bevorratung eines Vorrats des Reduktionsmittels ein flexibler Vorratsbeutel verwendet wird, insbesondere ein Kunststoffsack. Der flexible Vorratsbeutel, für dessen Eigenschaften beispielsweise auf die obige Beschreibung verwiesen werden kann, umfasst mindestens eine Folienwand und mindestens eine Entnahmeöffnung zur Entnahme des Reduktionsmittels.

Das vorgeschlagene System, der vorgeschlagene flexible Vorratsbeutel sowie das vorgeschlagene Verfahren weisen gegenüber bekannten Vorrichtungen und Verfahren zahlreiche Vorteile auf. Insbesondere ergibt sich eine einfache Handhabung, beispielsweise beim Befüllen, wobei der flexible Vorratsbeutel beispielsweise als Einweg- oder als Mehrweggebinde eingesetzt werden kann. Eine Be- und/oder Entlüftung des Vorratsbehälters, insbesondere des Vorratsbeutels, ist in der Regel nicht erforderlich. Weiterhin kann, aufgrund der flexiblen Eigenschaften des flexiblen Vorratsbeutels, eine Eisdruckfestigkeit sicher gewährleistet werden. Zudem kann, wie oben beschrieben, eine externe Beheizung effizient dargestellt werden, und es lassen sich Schwappen und die damit verbundenen Schwappgeräusche sowie ein frühzeitiges Ansaugen von Luft bei nahezu leerem Vorratsbehälter zumindest weitgehend vermeiden. Mit den oben vorgeschlagenen Ausgestaltungen kann ein gesicherter, geschlossener Transport des Reduktionsmittels gewährleistet werden, ohne dass eine aufwändige Tankblase und Zusatzelemente, wie beispielsweise eine dichte Befüllöffnung, Leitungsdurchführungen und Entlüftungen erforderlich wären. Derartige Elemente können jedoch selbstverständlich zusätzlich vorgesehen sein. Für den Endanwender und wahlweise für das Servicepersonal kann der direkte Umgang mit dem Reduktionsmittel vermieden werden, da beispielsweise betriebsfertig befüllte Vorratsbeutel bereitgehalten werden können. Diese können dann, beispielsweise mittels hydraulischer Steckverbindungen, am Fahrzeug angeschlossen werden. Der Vorratsbeutel kann, wie oben beschrieben, in einem geeigneten Schutzgehäuse, also einem stabilen Behältnis, aufgenommen sein und so gegen externe Krafteinwirkungen wirksam geschützt werden. Hierdurch lassen sich die mechanischen Risiken, welche die Verwendung eines flexiblen Vorratsbeutels für die Aufnahme von Flüssigkeiten in vielen Fällen mit sich bringt, stark vermindern.

Durch die Verwendung eines flexiblen Vorratsbeutels, beispielsweise eines Kunststoffsacks, insbesondere mit einer flexiblen, dünnen Kunststoffhaut, ergibt sich gegenüber einem herkömmlichen Tank mit starrer Außenhaut ein zusätzlicher Freiheitsgrad, der gerade bei der Bevorratung von Reduktionsmittel vorteilhaft sein kann. Der flexible Vorratsbeutel kann insbesondere zusammenfaltbar ausgestaltet sein. Durch die flexible Ausgestaltung des Vorratsbeutels kann, im Gegensatz zu einem starren Tank mit einer starren Außenhaut und einem vorgegebenen Innenvolumen, auf ein Be- und Entlüftungsventil verzichtet werden. Hieraus ergibt sich der Vorteil, dass keine Emission von Gasen in die Umgebung stattfinden kann, beispielsweise keine Ammoniak-Emission.

Ein weiterer Vorteil der Verwendung des flexiblen Vorratsbeutels liegt darin, dass die Volumenänderungen, welche bei Phasenänderungen auftreten können, ausgeglichen werden können. Wie oben dargestellt, nimmt das Volumen von AdBlue beim Gefrieren beispielsweise um ca. 10 % zu, was vom Tank ohne Schaden aufgenommen werden muss. Erschwerend kommt hinzu, dass sich das Eiswachstum nicht homogen ausbreitet, sondern dass sich am Ende des Gefriervorgangs im Eiskörper starke lokale Verwerfungen und Auswüchse einstellen. Bei herkömmlichen, starren Kunststofftanks kann dies zu großen Beulen im Tank führen, bis hin zu einer möglichen Schädigung. Dies ist bei herkömmlichen Tanks besonders kritisch, da bei derartigen konventionellen, starren Tanks das zusätzliche Ausdehnungsvolumen nicht immer die dafür vorgesehenen Lufträume findet. Beim flexiblen Vorratsbeutel, insbesondere beim Kunststoffsack, wird dieses Problem jedoch aufgrund des zusätzlichen Freiheitsgrades elegant gelöst. Die flexible Außenhaut in Form der flexiblen Folienwand wird sich stets in den vom Eis geforderten zusätzlichen Raum hinbewegen. Überdies hat die dünne Außenhaut in Form der flexiblen Folienwand die Fähigkeit, sich elastisch und/oder plastisch zu verformen, und so den Eisdruck mühelos aufzunehmen.

Weitere Vorteile liegen in den optionalen oben beschriebenen Heizkonzepten. Da der Vorratsbeutel gegebenenfalls als Einwegbehältnis ausgestaltet sein kann, kann es, im Gegensatz zu konventionellen Tanks, vorteilhaft sein, die Heizung und Sensorik außerhalb des Kunststoffsacks anzubringen. Wahlweise kann jedoch auch, wie oben dargestellt, eine interne Heizung erfolgen, welche beispielsweise individuell im Vorratsbeutel positioniert werden kann. Beim flexiblen Vorratsbeutel, insbesondere beim Kunststoffsack, ist aufgrund der dünnen Wandstärke mit gutem Wärmeübergang eine außerhalb des Tanks positionierte Heizung vorteilhaft. Die Heizung muss somit nicht gegenüber dem Reduktionsmittel resistent sein, beispielsweise gegenüber dem vergleichsweise aggressiven AdBlue. Die Heizung kann beispielsweise wahlweise als Flächenheizung, Linienheizung, Punktheizung oder als Kombination der genannten und/oder anderer Heizarten ausgebildet werden. Die flexible Folienwand kann in vielen Fällen das Heizelement eng umschlingen, wodurch eine große Wärmeübertragungsfläche entsteht und wodurch beispielsweise ein gutes Auftauverhalten gewährleistet
werden kann. Beispielsweise können bekannte Heizfolien von Außenspiegelheizungen oder Elemente von Sitzheizungen (in der Regel Flächenheizungen) oder auch Strahlungsquellen, wie beispielsweise Infrarotstrahler, verwendet werden. Alternativ ist die Beheizung über das Motorkühlwasser, welches beispielsweise in Leitungen unterhalb des Vorratsbeutels, beispielsweise des Bodens des flexiblen Vorratsbeutels, verlegt werden kann, möglich. Auf diese Weise kann beispielsweise eine Linienheizung und/oder auch eine Flächenheizung gewährleistet werden. Die flexible Folienwand kann beispielsweise die Kühlwasserleitung ohne Spalt umschlingen oder umgekehrt. Alternativ kann der flexible Vorratsbeutel auch auf eine gekrümmte Bodenfläche des Schutzgehäuses aufgelegt werden, beispielsweise einen als steilen Hügel ausgebildeten Heizkörper. Hierdurch ergibt sich eine besonders große Heizfläche. Dieser steile Hügel kann wahlweise elektrisch und/oder über das Motorkühlwasser beheizt werden.

Besonders vorteilhaft gegenüber bekannten Tanksystemen sind auch die oben vorgeschlagenen Möglichkeiten zur Vermeidung von Schwappgeräuschen, welche die flexiblen Eigenschaften des Vorratsbeutels gezielt ausnutzen. Normalerweise entstehen Schwappgeräusche dadurch, dass eine horizontale Welle zunächst gegen die Tankwand und dann im Luftraum gegen die Tankdecke schlägt. Besonders geräuschvoll ist dabei üblicherweise der Schlag gegen die Decke. Im Falle des flexiblen Vorratsbeutels liegt die Decke jedoch zumeist direkt auf der Flüssigkeit auf. Dadurch hat die Flüssigkeit einerseits zumeist keine Möglichkeit zur Beschleunigung und andererseits stellt die flexible Kunststoffdecke eine stark gedämpfte Wand dar. Bereits hierdurch wird die Geräuschentwicklung durch Schwappgeräusche stark vermindert. Zusätzlich können, wie oben dargestellt, ein oder mehrere Schwappschutzelemente vorgesehen sein, welche ebenfalls die flexiblen Eigenschaften des Vorratsbeutels gezielt ausnutzen. Dabei kann durch äußere Einwirkung auf den Vorratsbeutel die genannte Unterteilung erfolgen, und/oder es können derartige Trennelemente in flexibler Form bereits in dem Vorratsbeutel vorgesehen sein. Allgemein wird, da das Schwappen durch Verwendung des flexiblen Vorratsbeutels und, durch Verwendung der Schwappschutzelemente stark reduziert ist, auch eine Luftansaugung, beispielsweise durch einen optionalen Saugschlauch, bei leerem Tank nur in geringem Umfang erfolgen.

### Kurze Beschreibung der Zeichnungen

Ausführungsbeispiele der Erfindung sind in den Zeichnungen dargestellt und in der nachfolgenden Beschreibung näher erläutert.

Es zeigen
- Figuren 1A und 1B: ein einfaches Beispiel eines nicht erfindungsgemäßen Systems mit einem flexiblen Vorratsbeutel;
- Figur 2: ein zweites Beispiel eines nicht erfindungsgemäßen Systems mit unten liegender Entnahmeöffnung;
- Figur 3: ein drittes Beispiel eines nicht erfindungsgemäßen Systems mit oben liegender Entnahmeöffnung;
- Figur 4: ein viertes Beispiel eines nicht erfindungsgemäßen Systems mit flexiblem Vorratsbeutel und Heiztopf;
- Figur 5: ein fünftes Beispiel eines nicht erfindungsgemäßen Systems mit einem Schutzgehäuse;
- Figuren 6A und 6B: ein zu Figur 5 alternatives Beispiel eines nicht erfindungsgemäßen Systems mit einem Schutzgehäuse mit einer verschließbaren Beladeöffnung im Deckel;
- Figur 7: ein zu den Figuren 6A und 6B alternatives System mit einer verschließbaren Beladeöffnung im Bodenbereich;
- Figuren 8A und 8B: zwei Ausführungsbeispiele eines erfindungsgemäßen Systems mit Schwappschutzelementen;
- Figur 9: ein Beispiel eines nicht erfindungsgemäßen Systems mit einem Kompensationselement;
- Figuren 10A und 10B: verschiedene Beispiele eines nicht erfindungsgemäßen Systems mit Füllstandsmessern; und
- Figur 11: ein Ausführungsbeispiel eines Reserve-Vorratsbehälters.

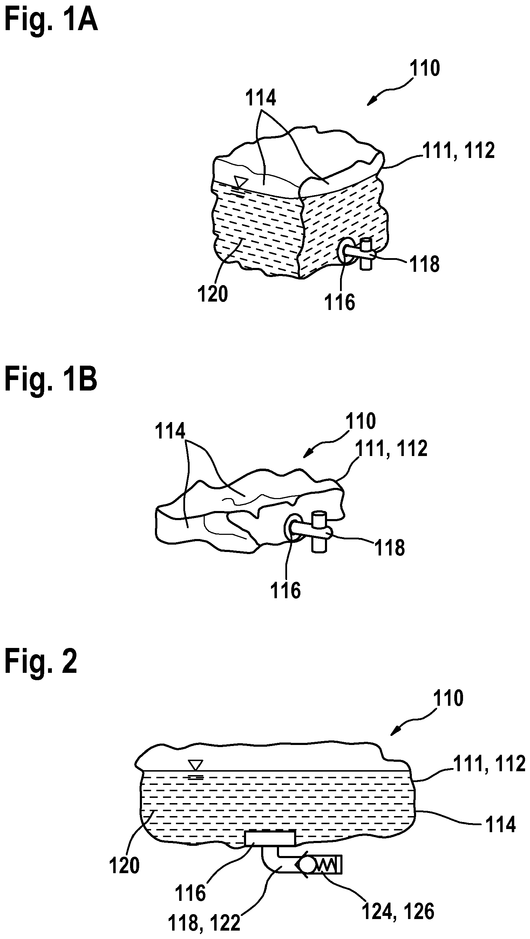

In den Figuren 1A und 1B ist ein einfachstes Beispiel eines nicht erfindungsgemäßen Systems 110 zum Einbringen eines schadstoffvermindernden Mediums in ein Abgas dargestellt. Das System 110 umfasst einen Vorratsbehälter 111 mit einem flexiblen Vorratsbeutel 112. Weitere Elemente des Systems sind nicht gezeigt, wie beispielsweise ein Dosiersystem zum Einsprühen des schadstoffvermindernden Mediums in das Abgas, ein Rohrleitungssystem oder Ähnliches. Derartige Komponenten können zusätzlich in dem System 110 enthalten sein. Der flexible Vorratsbeutel 112 ist in diesem Beispiel als flexibler Kunststoffsack ausgestaltet und weist flexible Folienwände 114 sowie eine Entnahmeöffnung 116 auf. Diese Entnahmeöffnung 116 ist im dargestellten Beispiel durch einen einfachen Verschluss 118 verschlossen. Figur 1A zeigt dabei den flexiblen Vorratsbeutel 112 in einem Zustand, in welchem dieser mit einem Vorrat an Reduktionsmittel 120, beispielsweise AdBlue, befüllt ist. Figur 1B zeigt hingegen eine Situation, in welcher der flexible Vorratsbeutel 112 entleert und zusammengefaltet ist.

In den Figuren 1A und 1B ist die Entnahmeöffnung 116 am unteren Rand des flexiblen Vorratsbeutels 112 seitlich angeordnet. Dies ist jedoch nicht notwendigerweise der Fall. So zeigt Figur 2 ein zweites Beispiel eines nicht erfindungsgemäßen Systems 110 und eines flexiblen Vorratsbeutels 112, in welchem die Entnahmeöffnung 116 in einem unteren Bereich des flexiblen Vorratsbeutels 112 angeordnet ist. Weiterhin zeigt dieses Beispiel anstelle oder zusätzlich zu dem Verschluss 118 gemäß den Figuren 1A und 1B, dass an der Entnahmeöffnung 116 ein Befestigungselement 122 zum Befestigen mindestens einer (in Figur 2 nicht dargestellten) Entnahmeleitung vorgesehen sein kann. Dieses Befestigungselement 122 kann beispielsweise als hydraulische Steckverbindung ausgestaltet sein, beispielsweise mit einem Schraub- oder Bajonettverschluss. Weiterhin kann, wie in Figur 2 dargestellt, ein Ventil 124 vorgesehen sein, beispielsweise, wie in Figur 2 dargestellt, ein Rückschlagventil 126.

Weiterhin zeigt Figur 2 auch, dass die in den Figuren 1A und 1B dargestellte Quader- oder Würfelform des flexiblen Vorratsbeutels 112 im gefüllten Zustand nicht notwendig ist. So können grundsätzlich beliebige Formen vorgesehen sein, beispielsweise runde Formen oder vollständig konturlose Formen, welche sich auch der Umgebung anpassen können. Als Material für den flexiblen Vorratsbeutel 112 kommen insbesondere Kunststoffe in Betracht, beispielsweise Polyethylen, Polypropylen, fluorierte Polyethylene (beispielsweise PTFE oder Teflon), Polyamide (beispielsweise PA12) oder ähnliche Kunststoffe. Alternativ oder zusätzlich können auch andere Arten von Materialien zum Einsatz kommen. Weiterhin können auch Teile des flexiblen Vorratsbeutels 112 starr ausgebildet sein, beispielsweise ein Bereich um die Entnahmeöffnung 116. Weiterhin können auch der Verschluss 118 und/oder das Befestigungselement 122 und/oder das Ventil 124 und/oder das Rückschlagventil 126 aus starren, unflexiblen Materialien hergestellt sein, beispielsweise unflexiblen Kunststoffen und/oder Metallen. Auch andere Werkstoffe sind grundsätzlich möglich.

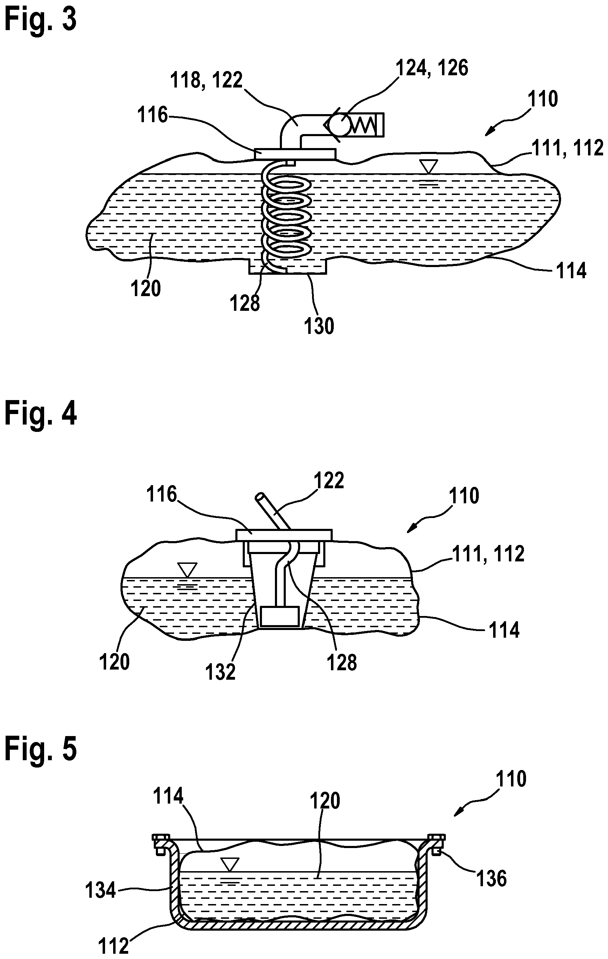

Während in dem Ausführungsbeispiel gemäß Figur 2 die Entnahmeöffnung 116 im Betrieb des Systems 110 unten angeordnet ist, sind grundsätzlich auch andere Ausgestaltungen möglich. So zeigt Figur 3 ein Beispiel bei welchem die Entnahmeöffnung im Betrieb des Systems 110 am oberen Ende des flexiblen Vorratsbeutels 112 angeordnet ist. Wiederum ist ein Befestigungselement 122 mit einem Ventil 124 vorgesehen, welches wiederum als von der Entnahmeöffnung 116 ausgehender, auf die Außenseite des Vorratsbeutels 112 ragender Stutzen ausgestaltet sein kann. Von diesem Befestigungselement 122 ragt in den flexiblen Vorratsbeutel 112 ein Entnahmeschlauch 128 hinein, welcher beispielsweise ebenfalls flexibel ausgestaltet ist und welcher in einem Entnahmesumpf 130 im unteren Bereich des flexiblen Vorratsbeutels 112 endet. Der Entnahmesumpf 130 kann beispielsweise als Vertiefung im Bodenbereich des flexiblen Vorratsbeutels 112 ausgestaltet sein. Der flexible Vorratsbeutel 112 kann beispielsweise in diesem Bereich des Entnahmesumpfs 130 im Wesentlichen steif oder steifer als im Bereich der flexiblen Folienwände 114 ausgebildet sein. Der Entnahmesumpf 130 kann eine vollständige Entleerung des flexiblen Vorratsbeutels 112 sicherstellen.

In Figur 4 ist ein weiteres Beispiel eines nicht erfindungsgemäßen Systems 110 mit einem Vorratsbeutel 112 gezeigt, welches zunächst im Wesentlichen dem Beispiel gemäß Figur 3 entspricht. Wiederum kann beispielsweise die Entnahmeöffnung 116 im oberen Bereich des flexiblen Vorratsbeutels 112 angeordnet sein. Durch die Entnahmeöffnung 116 ragt wiederum ein flexibler Entnahmeschlauch 128 ins Innere des flexiblen Vorratsbeutels 112. Im Unterschied zum Beispiel gemäß Figur 3 weist der flexible Vorratsbeutel 112 jedoch weiterhin mindestens einen Heiztopf 132 auf, welcher beispielsweise den Entnahmeschlauch 128 vollständig umgibt. Ein derartiger Heiztopf 132 ist grundsätzlich aus starren Tanks für Harnstoff-Wasser-Lösungen grundsätzlich bekannt und kann nunmehr auch in einen erfindungsgemäßen flexiblen Vorratsbeutel 112 integriert werden. Der Heiztopf 132 kann an einer Entnahmestelle am Ende des Entnahmeschlauchs 128 für ein lokales Aufheizen und Auftauen einer gefrorenen Menge an Reduktionsmittel 120 sorgen.

In Figur 5 ist ein Beispiel eines nicht erfindungsgemäßen Systems 110 dargestellt, bei welchem der Vorratsbehälter 111 weiterhin ein den flexiblen Vorratsbeutel 112 aufnehmendes Schutzgehäuse 134 aufweist. Im dargestellten Beispiel ist das Schutzgehäuse 134 als nach oben offene Kunststoffwanne oder Kunststoffkiste ausgestaltet, wobei jedoch auch andere Materialien möglich sind, beispielsweise metallische Materialien oder Verbundmaterialien. Das Schutzgehäuse 134 weist Befestigungselemente 136 auf, beispielsweise Flansche, Haken, Rastverbindungen oder Ähnliches, mittels derer das Schutzgehäuse 134 an einem Kraftfahrzeug befestigt werden kann, beispielsweise an einem Chassis eines Kraftfahrzeugs. Der flexible Vorratsbeutel 112, welcher nach Abnehmen des Schutzgehäuses 134 von dem Kraftfahrzeug und/oder nach anderweitiger Freigabe der oben offenen Seite des Schutzgehäuses 134 in das Schutzgehäuse 134 eingelegt werden kann, ist in Figur 5 lediglich symbolisch angedeutet. Beispielsweise kann der flexible Vorratsbeutel 112 gemäß einem oder mehreren der obigen Ausführungsbeispiele ausgestaltet sein.

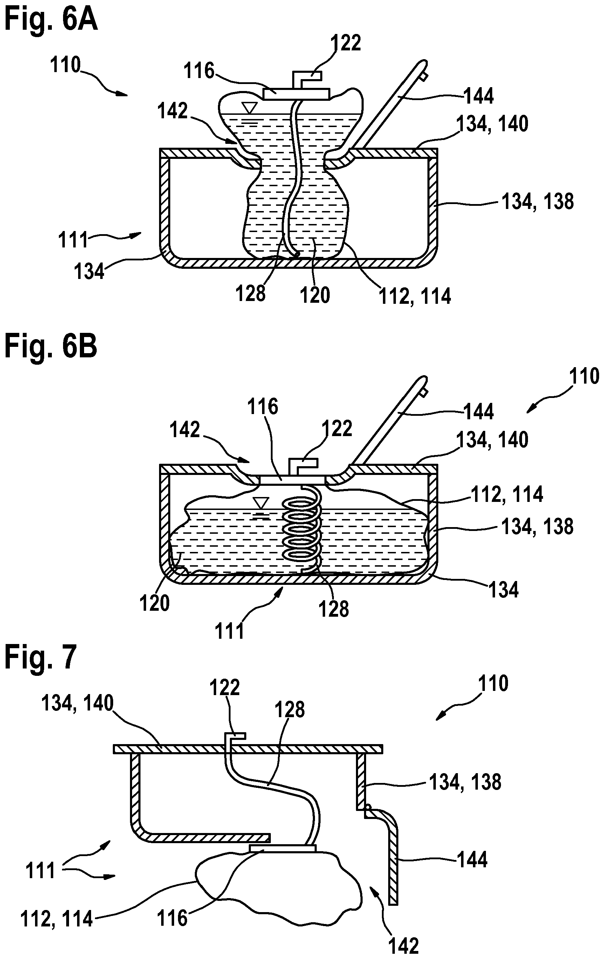

In den Figuren 6A und 6B ist ein Beispiel eines nicht erfindungsgemäßen Systems 110 dargestellt, welches eine Abwandlung des Systems gemäß Figur 5 darstellt. Wiederum umfasst der Vorratsbehälter 111 in diesem Beispiel neben einem flexiblen Vorratsbeutel 112 ein den flexiblen Vorratsbeutel 112 aufnehmendes Schutzgehäuse 134. Im Unterschied zum Beispiel gemäß Figur 5 ist das Schutzgehäuse 134 jedoch im Betrieb nach oben geschlossen und umfasst neben einer den flexiblen Vorratsbeutel 112 aufnehmenden Wanne 138, beispielsweise einer Kunststoff- und/oder Metallwanne 138, ein Deckelteil 140, welches die Wanne 138 nach oben hin verschließt. Dieses Deckelteil 140 weist eine Beladeöffnung 142 auf, durch welche der flexible Vorratsbeutel 112 ins Innere des Schutzgehäuses 134 eingebracht werden kann. Dabei zeigt Figur 6A eine Situation, in welcher der flexible Vorratsbeutel 112 durch die Beladeöffnung 142 eingebracht wird, wohingegen Figur 6B eine Situation zeigt, in welcher das Einfügen abgeschlossen ist. Die Beladeöffnung 142 ist dabei vorzugsweise als verschließbare Beladeöffnung 142 ausgestaltet und weist beispielsweise eine Verschlussklappe 144 in Form eines klappbaren Deckels auf. Dabei kann der Verschluss durch die Verschlussklappe 144 beispielsweise derart erfolgen, dass die Entnahmeöffnung 116 durch die Verschlussklappe 144 hindurch zugänglich ist, beispielsweise indem ein Befestigungselement 122 durch die Verschlussklappe 144 hindurchragt oder durch diese Verschlussklappe 144 hindurch zugänglich ist. Auch andere Ausgestaltungen sind möglich.

Dabei zeigt Figur 6A ein Beispiel des flexiblen Vorratsbeutels 112, welches beispielsweise im Wesentlichen dem Beispiel gemäß Figur 3 entsprechen kann. Ein optionaler Verschluss 118 und/oder ein optionales Ventil 124 sind in Figur 6A und in Figur 6B dabei nicht gezeigt, können jedoch grundsätzlich wiederum vorgesehen sein. Auch ein Entnahmesumpf 130 kann optional wiederum vorgesehen sein. Das Schutzgehäuse 134 kann dabei ganz oder teilweise separat von den übrigen Bauteilen eines Kraftfahrzeugs ausgestaltet sein. Optional kann dieses Schutzgehäuse 134 jedoch auch ganz oder teilweise bauteilidentisch mit bereits vorhandenen Komponenten eines Kraftfahrzeugs ausgestaltet sein und/oder in vorhandene Komponenten integriert sein. So kann in dem in den Figuren 6A und 6B dargestellten Beispiel die Wanne 138 beispielsweise eine Reserveradmulde sein und/oder kann in eine derartige Reserveradmulde integriert werden.

Bei dem Beispiel gemäß den Figuren 6A und 6B ist das Schutzgehäuse 134 von oben her durch das Deckelteil 140 verschließbar bzw. zugänglich und beladbar. Dies ist jedoch nicht notwendigerweise der Fall. So zeigt Figur 7 ein alternatives Beispiel eines nicht erfindungsgemäßen Systems, welches zunächst weitgehend dem System 110 gemäß den Figuren 6A und 6B entsprechen kann. Wiederum kann das Schutzgehäuse 134 beispielsweise eine Wanne 138 und ein Deckelteil 140 umfassen. Im Unterschied zum Beispiel gemäß den Figuren 6A und 6B ist die Beladeöffnung 142 jedoch in dem Beispiel gemäß Figur 7 an der Unterseite der Wanne 138 vorgesehen, so dass eine Beladung des Schutzgehäuses 134 mit dem vollen flexiblen Vorratsbeutel 112 bzw. ein Entladen des entleerten flexiblen Vorratsbeutels 112 von unten her erfolgt. Wiederum kann die Beladeöffnung 142 dabei durch eine Verschlussklappe 144 in Form eines klappbaren Deckels verschließbar sein. Es sei darauf hingewiesen, dass in diesem Beispiel wie auch in den übrigen Beispielen anstelle einer Verschlussklappe 144 auch andere Verschließmechanismen vorgesehen sein können, beispielsweise Schieber, abnehmbare Deckel oder Ähnliches.

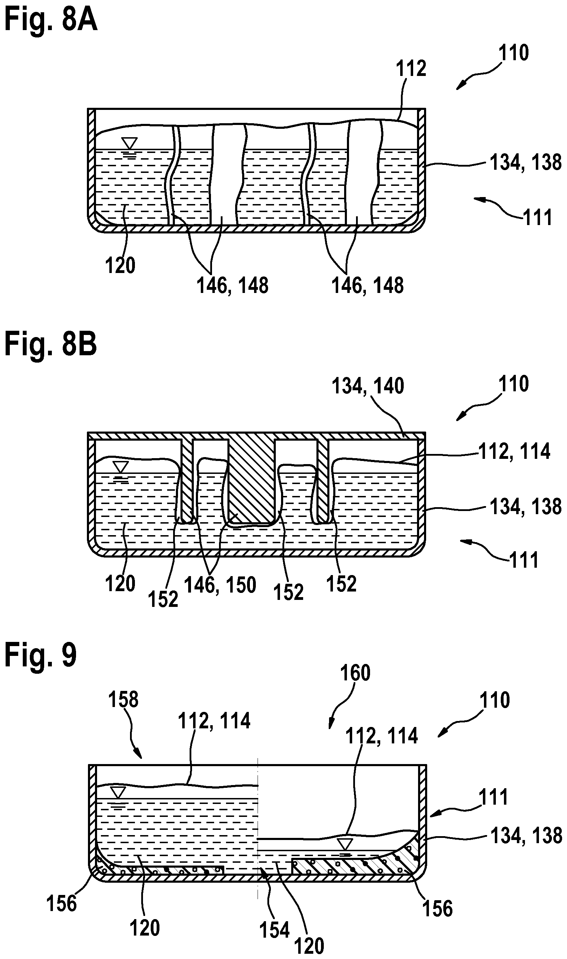

Das System 110 umfasst erfindungsgemäß ein oder mehrere Schwappschutzelemente 146. Dies ist in den Ausführungsbeispielen gemäß den Figuren 8A und 8B dargestellt, welche auch miteinander und/oder mit anderen Ausführungsbeispielen kombinierbar sind. Dabei zeigt Figur 8A ein Ausführungsbeispiel eines Systems 110, welches beispielsweise im Wesentlichen dem System 110 gemäß Figur 5 entsprechen kann. Auch die anderen oben beschriebenen Systeme 110 sind jedoch grundsätzlich erfindungsgemäß modifizierbar. Das Schutzgehäuse 134 umfasst wiederum beispielsweise eine Wanne 138, in welche der in Figur 8A lediglich symbolisch angedeutete flexible Vorratsbeutel 112 eingelegt werden kann. In dem flexiblen Vorratsbeutel 112 sind in diesem Fall Schwappschutzelemente 146 in Form flexibler Trennelemente 148 eingebracht. Diese flexiblen Trennelemente 148 unterteilen den Innenraum des flexiblen Vorratsbeutels 112 in Teil-Innenräume, welche auch fluidisch miteinander in Verbindung stehen können. Dadurch wird ein Schwappvolumen innerhalb des flexiblen Vorratsbeutels 112 verringert, wodurch wiederum Schwappgeräusche verringert werden. Die flexiblen Trennelemente 148 können beim Zusammenfalten des flexiblen Vorratsbeutels 112 mit zusammengefaltet werden.

Alternativ oder zusätzlich zu den in den flexiblen Vorratsbeutel 112 integrierten flexiblen Trennelementen 148 können auch externe Schwappschutzelemente 146 vorgesehen sein, welche den Innenraum des flexiblen Vorratsbeutels 112 unterteilen. Ein Ausführungsbeispiel ist in Figur 8B dargestellt. In diesem Fall kann das Schutzgehäuse 134 beispielsweise weitgehend dem Schutzgehäuse 134 gemäß den in den Figuren 6A, 6B und 7 dargestellten Ausführungsbeispielen entsprechen. Auch andere Ausgestaltungen sind jedoch möglich. In diesem Fall sind an den Innenwänden des Schutzgehäuses 134, beispielsweise am Deckelteil 140, starre Trennelemente 150 vorgesehen, welche in den flexiblen Vorratsbeutel 112 hineindrücken und als Schwappschutzelemente 146 dienen. Auch durch diese starren Trennelemente 150 wird somit der Innenraum des flexiblen Vorratsbeutels 112 zumindest teilweise in kleinere Teilbereiche unterteilt, so dass die Schwappbewegungen insgesamt verringert werden.

Der flexible Vorratsbeutel 112 kann dabei auf herkömmliche Weise, beispielsweise gemäß einem oder mehreren der oben beschriebenen Ausführungsbeispiele, ausgestaltet sein und ist in den Figuren 8A und 8B lediglich symbolisch angedeutet. Weiterhin kann der flexible Vorratsbeutel 112 von außen zugängliche Taschen 152 umfassen, in welche beispielsweise die starren Trennelemente 150 von außen eingesteckt werden können. Verschiedene Ausgestaltungen sind möglich.

In vielen Fällen kann im Bodenbereich des flexiblen Vorratsbeutels 112 und/oder im Bodenbereich des Schutzgehäuses 134 ein Sumpf 154 zur Aufnahme einer Restmenge an Reduktionsmittel 120 vorgesehen sein. Dieser Sumpf kann eine vollständige Raumnutzung des Innenraums des flexiblen Vorratsbeutels 112 gewährleisten. Allerdings führt die Verwendung eines baulich ausgestalteten Sumpfes in flexible Vorratsbeutel 112 in vielen Fällen dazu, dass das Volumen des Innenraums des flexiblen Vorratsbeutels 112 nicht optimal ausgenutzt werden kann, da das den Sumpf bildende Element selbst ein gewisses Volumen einnimmt. In einem in Figur 9 dargestellten Beispiel, welches ebenfalls wiederum auch mit den übrigen Ausführungsbeispielen kombinierbar ist, ist daher im Vorratsbehälter 111, in diesem Fall innerhalb des flexiblen Vorratsbeutels 112, ein Kompensationselement 156 vorgesehen. Das System 110 kann ansonsten beispielsweise wiederum analog zu den übrigen Beispielen ausgestaltet sein, beispielsweise analog zum Beispiel in Figur 5, so dass bezüglich der übrigen Einzelheiten des Systems 110 auf dieses System verwiesen werden kann. Im Unterschied zu den vorhergehenden Beispielen ist jedoch in diesem Fall innerhalb des flexiblen Vorratsbeutels 112 das Kompensationselement 156 am Boden des Vorratsbeutels 112 vorgesehen. Beispielsweise kann dieses Kompensationselement 156 ein Schaumstoffelement umfassen, beispielsweise ein Schaumstoffelement, welches nicht durch das Reduktionsmittel 120 benetzbar ist.

In einem in Figur 9 im linken Teilbild dargestellten Zustand, in welchem der flexible Vorratsbeutel 112 mit Reduktionsmittel 120 gefüllt ist (in Figur 9 mit der Bezugsziffer 158 bezeichnet) ist das Kompensationselement 156, beispielsweise der Schaumstoff, durch das Gewicht des Reduktionsmittels 120 komprimiert. Das rechte Teilbild in Figur 9, welches symbolisch mit der Bezugsziffer 160 bezeichnet ist, zeigt hingegen einen weitgehend entleerten Zustand 160 des flexiblen Vorratsbeutels 112. Durch den aufgrund der verringerten Restmenge an Reduktionsmittel 120 verringerten Druck auf das Kompensationselement 156 kann dieses expandieren und ein größeres Volumen ausbilden. Durch diese Expansion des Kompensationselements 156 kann sich der Sumpf 154, beispielsweise in der Mitte des Bodens des flexiblen Vorratsbeutels 112, ausbilden. Das Kompensationselement 156 ist also derart ausgestaltet, dass dieses bei vollem flexiblen Vorratsbeutel 112 eine optimale Raumausnutzung des Innenraums des Vorratsbehälters 111 ermöglicht. Bei sinkender Flüssigkeitsmenge im Inneren des flexiblen Vorratsbeutels 112 hingegen dehnt sich dieses aus und bildet einen Sumpf 154 für die verbleibende Restmenge an Reduktionsmittel 120.

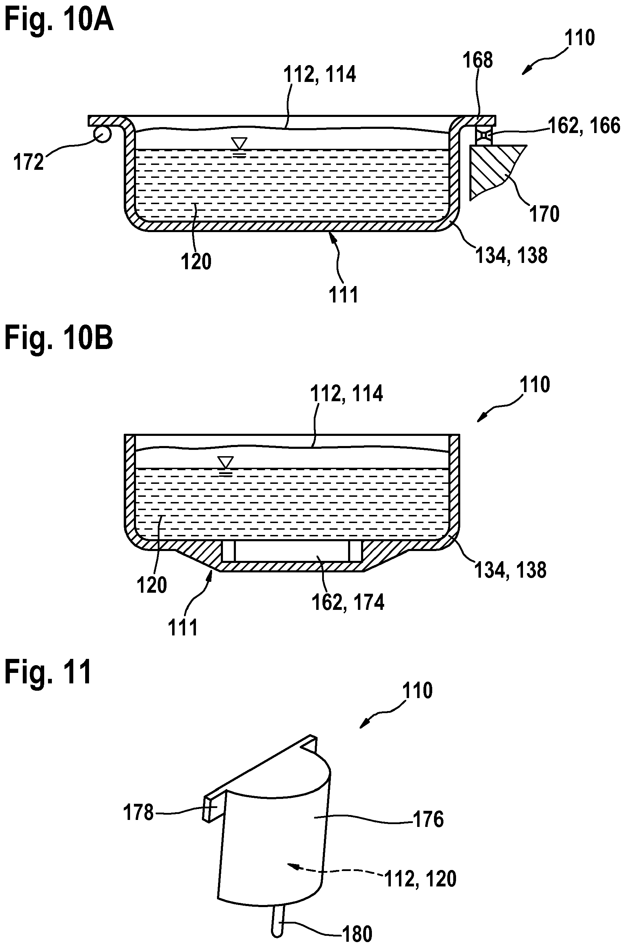

Weiterhin kann das System 110 in allen Ausführungsbeispielen ein oder mehrere Sensoren zur Erfassung mindestens einer Eigenschaft des Reduktionsmittels 120 umfassen, welche in den bisherigen Ausführungsbeispielen nicht dargestellt sind. Beispielsweise kann mindestens ein Füllstandssensor umfasst sein, welcher im Folgenden mit der Bezugsziffer 162 bezeichnet wird. In den Figuren 10A und 10B sind Beispiele von Systemen 110 mit derartigen Füllstandssensoren 162 gezeigt. Dabei zeigt Figur 10A ein Beispiel mit einem Schutzgehäuse 134, welches im Wesentlichen dem Schutzgehäuse 134 gemäß den Beispielen in den Figuren 5 oder 9 entsprechen kann. Auch andere Ausgestaltungen sind jedoch grundsätzlich möglich. Wiederum ist in diesem Schutzgehäuse 134 ein flexibler Vorratsbeutel 112 aufgenommen, welcher in Figur 10A lediglich symbolisch angedeutet ist. Weiterhin ist ein Füllstandssensor 162 vorgesehen, welcher in diesem Beispiel als Kraftsensor 166 ausgestaltet ist. Das Schutzgehäuse 134 weist einen überstehenden Rand 168 auf, welcher auf einer Auflage 170, beispielsweise einer Auflage am Kraftfahrzeug, aufliegt. Zwischen der Auflage 170 und dem Rand 168 ist der Kraftsensor 166 aufgenommen. Je nach Füllstand des flexiblen Vorratsbeutels 112 wirkt eine unterschiedliche Kraft auf den Kraftsensor 166, so dass hieraus auf den Füllstand des flexiblen Vorratsbeutels 112 geschlossen werden kann. An dem dem Rand 168 gegenüberliegenden Ende des Schutzgehäuses 134 kann beispielsweise ein Scharnier 172 vorgesehen sein, um welches das Schutzgehäuse 134 drehbar gelagert ist. Als Kraftsensor 166 kann beispielsweise ein Sitzbelegungssensor verwendet werden, wie er kommerziell bereits in Kraftfahrzeugen teilweise eingesetzt wird.

Alternativ oder zusätzlich zu der Ausgestaltung des Füllstandssensors 162 und/oder der Anordnung dieses Füllstandssensors 162 sind auch andere Ausgestaltungen und/oder Anordnungen möglich. So ist in Figur 10B ein zu Figur 10A alternatives Beispiel gezeigt, bei welchem wiederum ein Füllstandssensor 162 vorgesehen ist. Wiederum ist ein Schutzgehäuse 134 mit einer Wanne 138 vorgesehen, in welche der flexible Vorratsbeutel 112 mit dem Vorrat an Reduktionsmittel 120 eingefügt ist. Der flexible Vorratsbeutel 112 ist dabei in Figur 10B wiederum lediglich symbolisch angedeutet, wobei beispielsweise auf die obigen Ausführungsformen des flexiblen Vorratsbeutels 112 verwiesen werden kann. Unterhalb des flexiblen Vorratsbeutels 112 ist in der Wanne 138 des Schutzgehäuses 134 ein Drucksensor 174 vorgesehen. Der flexible Vorratsbeutel 112 drückt mit seinem Eigengewicht und dem Gewicht des Reduktionsmittels 120 auf diesen Drucksensor 174. Aus dem Signal dieses Drucksensors 174 lässt sich also auf den Füllstand des Reduktionsmittels 120 in dem flexiblen Vorratsbeutel 112 schließen.

In den bisherigen Ausführungsbeispielen sind Systeme 110 gezeigt, bei welchen der Vorratsbehälter 111 lediglich ein einzelnes Volumen an Reduktionsmittel 120 in einem einzigen flexiblen Vorratsbeutel 112 umfasst. Alternativ oder zusätzlich können jedoch auch mehrere Mengen an Reduktionsmittel 120 vorgesehen sein, beispielsweise in mehreren flexiblen Vorratsbeuteln 112 und/oder in anderen Arten von Tanks. So kann beispielsweise, abgesehen von einer Haupt-Vorratsmenge an Reduktionsmittel 120, zusätzlich mindestens ein Reserve-Vorrat des Reduktionsmittels 120 vorgesehen sein. In Figur 11 ist ein Ausführungsbeispiel eines Teils eines Systems 110 dargestellt, welches für die zusätzliche Aufnahme einer derartigen Reserve-Vorratsmenge an Reduktionsmittel 120 ausgestaltet ist. Das System 110, welches lediglich unvollständig in Figur 11 dargestellt ist, umfasst dementsprechend einen Reserve-Vorratsbehälter 176, welcher als eine Art "Reservekanister" dienen kann. Im Inneren dieses Reserve-Vorratsbehälters 176 kann ein Reservetank vorgesehen sein und/oder, optional, wiederum ein flexibler Vorratsbeutel 112 zur Aufnahme von Reserve-Reduktionsmittel 120. Der Reserve-Vorratsbehälter 176 kann beispielsweise mit Befestigungsmitteln 178 versehen sein, welche in Figur 11 lediglich symbolisch angedeutet sind. Über diese Befestigungsmittel, welche beispielsweise als entsprechende Halter ausgestaltet sein können, kann der Reserve-Vorratsbehälter 176 beispielsweise in einen Kofferraum und/oder einen Motorraum eines Kraftfahrzeugs und/oder an einer anderen Stelle eines Kraftfahrzeugs montiert werden. Der Reserve-Vorratsbehälter 176 umfasst dabei in dem in Figur 11 gezeigten Ausführungsbeispiel einen Anschluss 180, über welchen Reduktionsmittel 120 aus dem Reserve-Vorratsbehälter 176 entnommen werden kann, beispielsweise wiederum einen Anschluss 180 über einen Steckverbinder.

Bei entleertem Hauptbehälter des Systems 110 kann beispielsweise über einen geeigneten, beispielsweise kleiner als der Hauptbehälter dimensionierten Reserve-Vorratsbehälter 176, beispielsweise gemäß dem in Figur 11 gezeigten Ausführungsbeispiel, beispielsweise mit einem integrierten flexiblen Vorratsbeutel 112, eine Reservemenge an Reduktionsmittel zur Verfügung gestellt werden. Der Reserve-Vorratsbehälter 176 kann beispielsweise im Falle einer Entleerung des Haupt-Vorratsbehälters 111 des Systems 110 genutzt werden, welche in Figur 11 nicht dargestellt ist. Alternativ oder zusätzlich kann der Reserve-Vorratsbehälter 176 auch für eine erstmalige Versorgung beispielsweise bei eingefrorenem Haupt-Vorratsbehälter 111 benutzt werden. Ebenso kann mit dieser Lösung bei Niedrigpreis-Fahrzeugen der Anwender beispielsweise sicherstellen, dass bei niedrigen Umgebungsbedingungen flüssiges Reduktionsmittel vorhanden ist, wobei auch auf eine aufwändige Heizung und Füllstandsmessung verzichtet werden kann.

## Patentansprüche

1. System (110) zum Einbringen eines schadstoffvermindernden Mediums, insbesondere eines Reduktionsmittels (120) und/oder eines ReduktionsmittelVorläufers, in ein Abgas, umfassend mindestens einen Vorratsbehälter (111) zur Aufnahme eines Vorrats des schadstoffvermindernden Mediums, wobei der Vorratsbehälter (111) mindestens einen flexiblen Vorratsbeutel (112) zur Aufnahme des schadstoffvermindernden Mediums umfasst, insbesondere einen Kunststoffsack, wobei der flexible Vorratsbeutel (112) mindestens eine flexible Folienwand (114) und vorzugsweise mindestens eine Entnahmeöffnung (116) aufweist, **dadurch gekennzeichnet daß** der Vorratsbehälter (111) mindestens ein Schwappschutzelement (146) zur Unterdrückung von Schwappbewegungen des schadstoffvermindernden Mediums innerhalb des flexiblen Vorratsbeutels (112) umfasst, wobei das Schwappschutzelement (146) das Innere des flexiblen Vorratsbeutels (112) zumindest teilweise in Teilbereiche unterteilt und mindestens eines der folgenden Elemente umfasst: ein im Inneren des flexiblen Vorratsbeutels (112) angeordnetes Trennelement, insbesondere ein flexibles Trennelement (148); ein mit einem den flexiblen Vorratsbeutel (112) aufnehmenden Schutzgehäuse (134) verbundenes starres Trennelement (150), insbesondere ein mit einem Deckel des Schutzgehäuses (134) verbundenes starres Trennelement (150).

2. System (110) nach dem vorhergehenden Anspruch, weiterhin umfassend mindestens ein Schutzgehäuse (134), wobei das Schutzgehäuse (134) an oder in einem Kraftfahrzeug aufnehmbar ist und wobei das Schutzgehäuse (134) eingerichtet ist, um den Vorratsbeutel (112) ganz oder teilweise aufzunehmen.

3. System (110) nach dem vorhergehenden Anspruch, wobei das Schutzgehäuse (134) ganz oder teilweise in eine Reserveradmulde integriert ist und/oder ganz oder teilweise mit einer Reserveradmulde bauteilidentisch ist.

4. System (110) nach einem der beiden vorhergehenden Ansprüche, wobei das Schutzgehäuse (134) mindestens eine Beladeöffnung (142) aufweist, wobei die Beladeöffnung (142) eingerichtet ist, um ein Einbringen des Vorratsbeutels (112) in den Vorratsbehälter (111) und/oder ein Herausnehmen des Vorratsbeutels (112) aus dem Vorratsbehälter (111) zu ermöglichen, vorzugsweise eine verschließbare Beladeöffnung (142).

5. System (110) nach einem der vorhergehenden Ansprüche, wobei der Vorratsbeutel (112) mindestens eines der folgenden hydraulischen Elemente aufweist:
ein Befestigungselement (122) zum Anschließen mindestens einer Entnahmeleitung, insbesondere eine hydraulische Steckverbindung; eine Leitungsdurchführung; eine Entlüftung; ein Ventil (124), insbesondere ein Rückschlagventil (126); einen in den flexiblen Vorratsbeutel (112) hineinragenden Entnahmeschlauch (128); einen in den flexiblen Vorratsbeutel (112) hineinragenden Heiztopf (132).

6. System (110) nach einem der vorhergehenden Ansprüche, weiterhin umfassend mindestens ein Heizelement (132) zum Beheizen des Vorrats des schadstoffvermindernden Mediums.

7. System (110) nach dem vorhergehenden Anspruch, wobei das Schutzgehäuse (134) mindestens eine nicht-ebene Bodenfläche aufweist, insbesondere eine gekrümmte Bodenfläche, wobei der Vorratsbeutel (112) auf der nicht-ebenen Bodenfläche aufliegt, wobei das Heizelement (132) ganz oder teilweise in die nicht-ebene Bodenfläche integriert ist.

8. System (110) nach einem der beiden vorhergehenden Ansprüche, wobei das Heizelement (132) mindestens eines der folgenden Heizelemente umfasst: eine Flächenheizung, insbesondere eine Heizfolie; eine Fluidheizung, insbesondere eine mit einem Motorkühlkreislauf verbindbare Fluidheizung, insbesondere eine als Linienheizung ausgestaltete Fluidheizung; eine Widerstandsheizung; eine Peltier-Heizung; eine Infrarotheizung; einen Heiztopf (132).

9. System (110) nach einem der vorhergehenden Ansprüche, weiterhin umfassend ein Kompensationselement (156), wobei das Kompensationselement (156) eingerichtet ist, um bei einem hohen Füllstand des schadstoffvermindernden Mediums in dem Vorratsbeutel (112) ein geringeres Volumen einzunehmen als bei einem niedrigen Füllstand des schadstoffvermindernden Mediums in den Vorratsbeutel (112).

10. System (110) nach einem der vorhergehenden Ansprüche, weiterhin umfassend mindestens einen Sensor zur Erfassung mindestens einer Eigenschaft des schadstoffvermindernden Mediums, insbesondere einen oder mehrere der folgenden Sensoren: einen Füllstandsmesser (162) zum Erfassen eines Füllstandes des schadstoffvermindernden Mediums in dem Vorratsbeutel (112), insbesondere einen Kraftsensor (166) und/oder einen Drucksensor (174); einen Temperatursensor zum Erfassen einer Temperatur des schadstoffvermindernden Mediums; einen Leckagesensor zum Erkennen von aus dem Vorratsbeutel (112) austretendem schadstoffverminderndem Medium.

11. System (110) nach einem der vorhergehenden Ansprüche, weiterhin umfassend mindestens einen Reserve-Vorratsbehälter (176), wobei der Reserve-Vorratsbehälter (176) eingerichtet ist, um mindestens einen Reserve-Vorrat des schadstoffvermindernden Mediums aufzunehmen.

12. Verwendung eines flexiblen Vorratsbeutels (112) zum Einsatz in einem System (110) nach einem der Ansprüche 1 bis 11, umfassend mindestens eine flexible Folienwand (114) und mindestens eine Entnahmeöffnung (116) zur Entnahme eines schadstoffvermindernden Mediums, wobei der flexible Vorratsbeutel (112) weiterhin einen Vorrat des schadstoffvermindernden Mediums umfasst, insbesondere einen Vorrat an Reduktionsmittel (120) und/oder Reduktionsmittel-Vorläufer.

13. Verfahren zum Betreiben eines Systems (110) gemäß einem der Ansprüche 1 bis 11 zum Einbringen eines schadstoffvermindernden Mediums, insbesondere eines Reduktionsmittels (120) und/oder Reduktionsmittelvorläufers, in ein Abgas, wobei zur Bevorratung eines Vorrats des schadstoffvermindernden Mediums ein flexibler Vorratsbeutel (112) verwendet wird, insbesondere ein Kunststoffsack, wobei aus dem flexiblen Vorratsbeutel (112) mit mindestens einer Folienwand (114) und mindestens einer Entnahmeöffnung (116) schadstoffverminderndes Medium entnommen wird und mit mindestens einem Schwappschutzelement (146) Schwappbewegungen des schadstoffvermindernden Mediums innerhalb des flexiblen Vorratsbeutels (112) unterdrückt werden, wobei durch das Schwappschutzelement (146) das Innere des flexiblen Vorratsbeutels (112) zumindest teilweise in Teilbereiche unterteilt wird.

## Claims

1. System (110) for introducing a pollutant-reducing medium, in particular a reducing agent (120) and/or a reducing agent precursor, into an exhaust gas, comprising at least one supply vessel (111) for accommodating a supply of the pollutant-reducing medium, wherein the supply vessel (111) comprises at least one flexible supply pouch (112) for accommodating the pollutant-reducing medium, in particular a plastics bag, wherein the flexible supply pouch (112) has at least one flexible foil wall (114) and preferably at least one extraction opening (116), **characterized in that** the supply vessel (111) comprises at least one surge baffle element (146) for preventing surging movements of the pollutant-reducing medium within the flexible supply pouch (112), wherein the surge baffle element (146) divides the interior of the flexible supply pouch (112) at least partially into subregions and comprises at least one of the following elements: a separating element, in particular a flexible separating element (148), arranged in the interior of the flexible supply pouch (112); a rigid separating element (150) which is connected to a protective housing (134) which accommodates the flexible supply pouch (112), in particular a rigid separating element (150) which is connected to a lid of the protective housing (134).

2. System (110) according to the preceding claim, furthermore comprising at least one protective housing (134), wherein the protective housing (134) can be accommodated on or in a motor vehicle, and wherein the protective housing (134) is designed to entirely or partially accommodate the supply pouch (112).

3. System (110) according to the preceding claim, wherein the protective housing (134) is entirely or partially integrated into a spare-wheel well and/or is entirely or partially identical, in terms of components, to a spare-wheel well.

4. System (110) according to one of the two preceding claims, wherein the protective housing (134) has at least one loading opening (142), wherein the loading opening (142) is designed for enabling the supply pouch (112) to be introduced into the supply vessel (111) and/or for enabling the supply pouch (112) to be removed from the supply vessel (111), preferably a closable loading opening (142).

5. System (110) according to one of the preceding claims, wherein the supply pouch (112) has at least one of the following hydraulic elements: a fastening element (122) for the connection of at least one extraction line, in particular a hydraulic plug connection; a line leadthrough; a ventilation means; a valve (124), in particular a check valve (126); an extraction hose (128) which projects into the flexible supply pouch (112); a pot-shaped heating structure (132) which projects into the flexible supply pouch (112) .

6. System (110) according to one of the preceding claims, furthermore comprising at least one heating element (132) for heating the supply of the pollutant-reducing medium.

7. System (110) as claimed in the preceding claim, wherein the protective housing (134) has at least one non-planar base surface, in particular a curved base surface, wherein the supply pouch (112) lies on the non-planar base surface, wherein the heating element (132) is integrated entirely or partially into the non-planar base surface.

8. System (110) according to one of the two preceding claims, wherein the heating element (132) comprises at least one of the following heating elements: an areal heater, in particular a heating foil; a fluid-type heater, in particular a fluid-type heater which is connectable to an engine cooling circuit, in particular a fluid-type heater configured as a linear heater; a resistance heater; a Peltier heater; an infrared heater; a pot-shaped heating structure (132).

9. System (110) according to one of the preceding claims, furthermore comprising a compensation element (156), wherein the compensation element (156) is designed to accommodate a smaller volume in the case of a high filling level of the pollutant-reducing medium in the supply pouch (112) than in the case of a low filling level of the pollutant-reducing medium in the supply pouch (112).

10. System (110) according to one of the preceding claims, furthermore comprising at least one sensor for detecting at least one characteristic of the pollutant-reducing medium, in particular one or more of the following sensors: a filling level meter (162) for detecting a filling level of the pollutant-reducing medium in the supply pouch (112), in particular a force sensor (166) and/or a pressure sensor (174); a temperature sensor for detecting a temperature of the pollutant-reducing medium; a leakage sensor for identifying pollutant-reducing medium escaping from the supply pouch (112).

11. System (110) according to one of the preceding claims, furthermore comprising at least one reserve supply vessel (176), wherein the reserve supply vessel (176) is designed to accommodate at least a reserve supply of the pollutant-reducing medium.

12. Use of a flexible supply pouch (112) for use in a system (110) according to one of Claims 1 to 11, comprising at least one flexible foil wall (114) and at least one extraction opening (116) for the extraction of a pollutant-reducing medium, wherein the flexible supply pouch (112) furthermore comprises a supply of the pollutant-reducing medium, in particular a supply of reducing agent (120) and/or reducing agent precursor.

13. Method for operating a system (110) according to one of Claims 1 to 11 for introducing a pollutant-reducing medium, in particular a reducing agent (120) and/or reducing agent precursor, into an exhaust gas, wherein a flexible supply pouch (112), in particular a plastics bag, is used for storing a supply of the pollutant-reducing medium, wherein pollutant-reducing medium is extracted from the flexible supply pouch (112) having at least one foil wall (114) and at least one extraction opening (116), and surging movements of the pollutant-reducing medium within the flexible supply pouch (112) are prevented by means of at least one surge baffle element (146), wherein the interior of the flexible supply pouch (112) is at least partially divided into subregions by means of the surge baffle element (146).

## Revendications

1. Système (110) pour introduire un milieu réduisant les émissions nocives, en particulier un réducteur (120) et/ou un précurseur de réducteur, dans un gaz d'échappement, comprenant au moins un réservoir (111) pour recevoir une réserve du milieu réduisant les émissions nocives, le réservoir (111) comprenant au moins un sachet de stockage flexible (112) pour recevoir le milieu réduisant les émissions nocives, en particulier un sac en plastique, le sachet de stockage flexible (112) présentant au moins une paroi en film flexible (114) et de préférence au moins une ouverture de prélèvement (116), **caractérisé en ce que** le réservoir (111) comprend au moins un élément anti-éclaboussures (146) pour supprimer des mouvements de clapotis du milieu réduisant les émissions nocives à l'intérieur du sachet de stockage (112), l'élément anti-éclaboussures (146) divisant l'intérieur du sachet de stockage flexible (112) au moins en partie en régions partielles et comprenant au moins l'un des éléments suivants : un élément de séparation disposé à l'intérieur du sachet de stockage flexible (112), en particulier un élément de séparation flexible (148) ; un élément de séparation rigide (150) connecté à un boîtier de protection (134) recevant le sachet de stockage flexible (112), en particulier un élément de séparation rigide (150) connecté à un couvercle du boîtier de protection (134).

2. Système (110) selon la revendication précédente, comprenant en outre au moins un boîtier de protection (134), le boîtier de protection (134) pouvant être logé sur ou dans un véhicule automobile et le boîtier de protection (134) étant prévu pour recevoir complètement ou partiellement le sachet de stockage (112).

3. Système (110) selon la revendication précédente, dans lequel le boîtier de protection (134) est intégré complètement ou partiellement dans un creux pour la roue de secours et/ou est un composant complètement ou partiellement identique au creux pour la roue de secours.

4. Système (110) selon l'une quelconque des deux revendications précédentes, dans lequel le boîtier de protection (134) présente au moins une ouverture de chargement (142), l'ouverture de chargement (142) étant prévue pour permettre l'introduction du sachet de stockage (112) dans le réservoir (111) et/ou l'enlèvement du sachet de stockage (112) hors du réservoir (111), de préférence une ouverture de chargement (142) refermable.

5. Système (110) selon l'une quelconque des revendications précédentes, dans lequel le sachet de stockage (112) présente au moins l'un des éléments hydrauliques suivants : un élément de fixation (122) pour le raccordement d'au moins une conduite de prélèvement, en particulier un raccord enfichable hydraulique ; un passage de conduite ; une ventilation ; une soupape (124), en particulier un clapet antiretour (126) ; un tuyau de prélèvement (128) pénétrant dans le sachet de stockage flexible (112) ; un godet chauffant (132) pénétrant dans le sachet de stockage flexible (112).

6. Système (110) selon l'une quelconque des revendications précédentes, comprenant en outre au moins un élément chauffant (132) pour chauffer la réserve de milieu réduisant les émissions nocives.

7. Système (110) selon la revendication précédente, dans lequel le boîtier de protection (134) présente au moins une surface de fond non plane, en particulier une surface de fond courbe, le sachet de stockage (112) reposant sur la surface de fond non plane, l'élément chauffant (132) étant intégré complètement ou partiellement dans la surface de fond non plane.

8. Système (110) selon l'une quelconque des deux revendications précédentes, dans lequel l'élément chauffant (132) comprend au moins l'un des éléments chauffants suivants : un chauffage de surface, en particulier un film chauffant ; un chauffage fluide, en particulier un chauffage de fluide réalisé sous forme de chauffage de ligne ; un chauffage à résistance ; un chauffage Peltier ; un chauffage à infrarouge ; un godet chauffant (132) .

9. Système (110) selon l'une quelconque des revendications précédentes, comprenant en outre un élément de compensation (156), l'élément de compensation (156) étant prévu pour occuper dans le cas d'un niveau de remplissage élevé du milieu réduisant les émissions nocives dans le sachet de stockage (112) un plus faible volume que dans le cas d'un faible niveau du milieu réduisant les émissions nocives dans le sachet de stockage (112) .

10. Système (110) selon l'une quelconque des revendications précédentes, comprenant en outre au moins un capteur pour détecter au moins une propriété du milieu réduisant les émissions nocives, en particulier une propriété du milieu réduisant les émissions nocives, en particulier un ou plusieurs des capteurs suivants : un dispositif de mesure de niveau de remplissage (162) pour détecter un niveau de remplissage du milieu réduisant les émissions nocives dans le sachet de stockage (112), en particulier un capteur de force (166) et/ou un capteur de pression (174) ; un capteur de température pour détecter une température du milieu réduisant les émissions nocives ; un capteur de fuite pour détecter du milieu réduisant les émissions nocives sortant du sachet de stockage (112).

11. Système (110) selon l'une quelconque des revendications précédentes, comprenant en outre au moins un réservoir de réserve (176), le réservoir de réserve (176) étant prévu pour recevoir au moins un stock de réserve du milieu réduisant les émissions nocives.

12. Utilisation d'un sachet de stockage flexible (112) pour l'insertion dans un système (110) selon l'une quelconque des revendications 1 à 11, comprenant au moins une paroi de film flexible (114) et au moins une ouverture de prélèvement (116) pour prélever un milieu réduisant les émissions nocives, le sachet de stockage flexible (112) comprenant en outre une réserve du milieu réduisant les émissions nocives, en particulier une réserve de réducteur (120) et/ou de précurseur de réducteur.

13. Procédé pour faire fonctionner un système (110) selon l'une quelconque des revendications 1 à 11 pour introduire un milieu réduisant les émissions nocives, en particulier un réducteur (120) et/ou un précurseur de réducteur, dans un gaz d'échappement, un sachet de stockage flexible (112) étant utilisé pour le stockage d'un stock de milieu réduisant les émissions nocives, en particulier un sac en plastique, un milieu réduisant les émissions nocives étant prélevé hors du sachet de stockage flexible (112) comprenant au moins une paroi en film (114) et au moins une ouverture de prélèvement (116), et des mouvements de clapotis du milieu réduisant les émissions nocives à l'intérieur du sachet de stockage (112) étant supprimés à l'aide d'au moins un élément anti-éclaboussures (146), l'intérieur du sachet de stockage flexible (112) étant divisé au moins en partie en régions partielles par l'élément anti-éclaboussures (146).
